# DEMANDE DE BREVET EUROPEEN

(11) **EP 4 242 020 A1**
(43) Date de publication de la demande: **13.09.2023**
(21) Numéro de dépôt: 23157520.0
(22) Date de dépôt: 20.02.2023
(51) Int. Cl.: B60G 3/01

(54) **ENGIN MOTORISÉ PRÉSENTANT UN SYSTÈME DE SUSPENSION INTÉGRÉ À UNE ROUE**

(30) Priorité: 08.03.2022 FR 2201982
(71) Demandeur: Exel Industries, 51200 Epernay (FR)
(72) Inventeur: FRANC, Jérôme, 51200 EPERNAY (FR)
(74) Mandataire: Argyma

(57) **Abrégé**

La présente invention vise un système de suspension (10) intégré à une roue (2) pour un engin motorisé présentant au moins trois roues et un châssis, le système de suspension (10) étant mécaniquement connecté d'une part au moyeu (21) de la roue (2) correspondante et d'autre part au châssis, le système de suspension (10) comprenant deux éléments glissières (110) formant une fourche de suspension, un vérin de suspension (150) étant couplé à un système d'accumulateur hydraulique (120) configuré pour permettre l'ajustement de l'amortissement conféré par le système de suspension (10).

## Description

### DOMAINE TECHNIQUE

La présente invention concerne le domaine des engins motorisés, notamment à usage agricole.

En particulier, la présente invention se rapporte à un engin agricole, par exemple un engin de type pulvérisateur ou enjambeur pour la culture des vignes.

### ETAT DE LA TECHNIQUE

Comme cela est connu, un engin agricole comprend, de manière générale, un châssis sur lequel sont montés des roues, une cabine pour accueillir un conducteur, et des outils, par exemple de pulvérisation de produits, de taille des cultures, de récolte, ou encore de travail du sol.

Dans le contexte de machines destinées aux cultures viticoles, il existe des engins agricoles à quatre roues et des engins agricoles à trois roues. En particulier, pour des cultures de vignes étroites, l'un des enjeux réside dans la maniabilité de l'engin agricole par le conducteur. L'engin agricole à trois roues répond à cette problématique en permettant, d'une part, d'alléger et de rendre plus compacte l'engin, et, d'autre part, de faciliter la réalisation de manoeuvres de l'engin, par exemple de demi-tours en bout de rang.

Or, la maniabilité conférée par l'engin agricole à trois roues, par rapport à un engin agricole à quatre roues, se réalise au détriment de la stabilité de l'engin agricole, et par conséquent du confort en cabine pour le conducteur. C'est d'autant plus le cas que la roue avant de l'engin agricole à trois roues est classiquement localisée sous la cabine, les vibrations de la roue avant se transmettant à la cabine.

A titre d'exemple, le document FR 2 972 963 décrit une roue avec un moteur hydraulique intégré, et une fourche de suspension montée sur le moteur hydraulique de la roue correspondante. L'amortissement conféré par la fourche de suspension du document FR 2 972 963 peut cependant nuire à la précision de certaines opérations de travail des cultures.

En réponse à ces inconvénients, la présente invention propose un engin motorisé avec un système de suspension intégré à au moins l'une des roues de l'engin, permettant l'ajustement de l'amortissement conféré par le système de suspension. Ainsi, la présente invention offre l'avantage considérable de pouvoir adapter l'amortissement à l'opération en cours effectuée par l'engin, tout en prenant en compte le confort dans la cabine pour le conducteur.

### PRESENTATION DE L'INVENTION

Plus précisément, un aspect de l'invention a pour objet un système de suspension intégré à une roue pour un engin motorisé présentant au moins trois roues et un châssis. Le système de suspension est mécaniquement connecté d'une part au moyeu de la roue correspondante et d'autre part au châssis. De plus, le système de suspension comprend deux éléments glissières formant une fourche de suspension, et un vérin de suspension étant couplé à un système d'accumulateur hydraulique configuré pour permettre l'ajustement de l'amortissement conféré par le système de suspension.

La présente invention offre l'avantage considérable de pouvoir activer, ajuster, et désactiver la suspension de la roue correspondante, selon le type d'opération à mener par le conducteur de l'engin motorisé. Ainsi, par exemple, pour des opérations de travail de cultures nécessitant de la précision, l'amortissement du système de suspension pourra être réduit, voire désactivé. Pour des déplacements de l'engin motorisé sur route, ou entre deux zones de travail, le système de suspension pourra être activé, et ainsi améliorer le confort de conduite de l'engin motorisé pour le conducteur. En résumé, le système de suspension selon l'invention présente l'avantage de pouvoir être activé/désactivé et être réglé aisément.

Avantageusement, le vérin de suspension est positionné entre les deux éléments glissières du système de suspension. Mettre en place le vérin de suspension entre les deux éléments glissières permet de limiter encore l'encombrement du système de suspension, et d'avoir un module compact de suspension.

Avantageusement, le système de suspension comprend un support fixe de fourche mécaniquement connecté au châssis, et un support mobile de fourche mécaniquement connecté au moyeu de la roue correspondante. Chacun des deux éléments glissières comprend notamment une colonne de guidage et un fourreau de guidage configuré pour recevoir la colonne de guidage. Alors, l'un des colonnes de guidage ou des fourreaux de guidage des deux éléments glissières sont mécaniquement couplés au support fixe de fourche, l'autre des colonnes de guidage ou des fourreaux de guidage des deux éléments glissières étant mécaniquement couplés au support mobile de fourche. L'utilisation du support fixe de fourche et du support mobile de fourche permet avantageusement de renforcer mécaniquement la fixation des deux éléments glissières.

Avantageusement, le support fixe de fourche présente une section substantiellement en L. Alors, d'une part, les fourreaux de guidage des deux éléments glissières sont préférablement aménagés le long de l'une des branches de la section substantiellement en L, ladite branche étant substantiellement orientée dans un plan perpendiculaire à l'axe de rotation de la roue correspondante et en direction de l'axe de rotation de la roue correspondante. D'autre part, l'autre branche de la section substantiellement en L vient préférablement se rabattre au-dessus de la roue correspondante. La section substantiellement en L du support fixe de fourche permet d'avoir un support robuste du système de suspension tout en limitant l'encombrement généré par le système de suspension.

Avantageusement, le système d'accumulateur hydraulique comprend deux accumulateurs hydrauliques respectivement couplés par un circuit fluidique aux deux chambres du vérin de suspension. De plus, le système d'accumulateur hydraulique comprend notamment un distributeur hydraulique reliant par un circuit fluidique le vérin de suspension aux deux accumulateurs hydrauliques. Les deux accumulateurs hydrauliques participent notamment à la compression et à la détente du système de suspension.

Avantageusement, le système de suspension est configuré pour coupler et découpler le vérin de suspension du système d'accumulateur hydraulique, de sorte respectivement à activer et à désactiver l'amortissement de la roue correspondante par le système de suspension.

Avantageusement, le système d'accumulateur hydraulique est déporté par rapport à la roue correspondante, le système d'accumulateur hydraulique étant notamment fixé au châssis. Ainsi, l'encombrement au niveau de la roue est peu impacté par la mise en place du système d'accumulateur hydraulique. De plus, le châssis offre avantageusement un support plus stable au système d'accumulateur hydraulique.

Selon un autre aspect de l'invention, l'invention se rapporte à un engin motorisé comprenant le système de suspension décrit précédemment de manière à former un engin agricole, notamment un enjambeur de traitement dans un vignoble.

Avantageusement, l'engin motorisé comprend un système de direction configuré pour transmettre la direction à la roue intégrant le système de suspension, le système de direction étant mécaniquement couplé au système de suspension. Ceci permet avantageusement d'améliorer la robustesse de la transmission de la direction.

Avantageusement, l'engin motorisé comprend trois roues dont une roue avant et deux roues arrières, le système de suspension étant intégré à la roue avant de l'engin motorisé. Par conséquent, le système de suspension permet d'atténuer la transmission des vibrations de la roue avant à la cabine en général située juste au-dessus de la roue avant. Le système de suspension permet également d'ajuster la hauteur de l'avant du châssis pour modifier la hauteur d'un outil telle qu'une rogneuse par exemple.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig. 1] : la figure 1 est une représentation schématique d'une vue d'un exemple d'engin motorisé selon un mode de réalisation de l'invention ;
[Fig. 2] : la figure 2 est une représentation schématique d'une vue d'un exemple de roue intégrant un système de suspension selon un mode de réalisation de l'invention pour un engin motorisé ;
[Fig. 3] : la figure 3 est une représentation schématique d'une vue latérale de l'exemple de roue intégrant le système de suspension selon un mode de réalisation de l'invention ;
[Fig. 4] : la figure 4 est une représentation schématique d'une vue éclatée d'un exemple de roue intégrant le système de suspension selon un mode de réalisation de l'invention ;
[Fig. 5] : la figure 5 est un diagramme schématique d'un circuit fluidique du système de suspension selon un mode de réalisation de l'invention ;
[Fig. 6] : la figure 6 est une représentation schématique du circuit fluidique du système de suspension selon un mode de réalisation de l'invention.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un système de suspension intégré à une roue d'un engin motorisé. L'invention sera décrite ci-après dans le contexte d'un engin agricole, notamment un enjambeur, pour les cultures de vignes, par exemple de vignes étroites. Cependant, cela ne constitue pas une limitation de l'invention à cette application particulière, l'invention pouvant être mise en oeuvre dans tout engin motorisé ayant au moins trois roues, par exemple un engin motorisé à trois roues ou un engin motorisé à quatre roues. Dans la suite de la présente demande, l'invention sera décrite dans le contexte non-limitatif d'un engin motorisé à trois roues comprenant une roue avant et deux roues arrières. De plus, l'engin motorisé peut être un véhicule automoteur ou tracté.

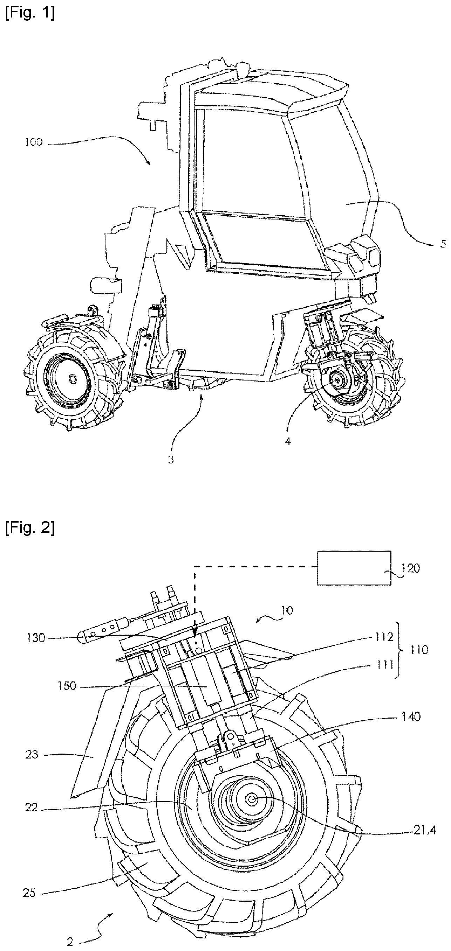

La figure 1 illustre un exemple d'engin motorisé 100 selon un aspect de l'invention. L'engin motorisé 100 comprend un châssis 3 et au moins un organe moteur 4 configuré pour entraîner en rotation l'une des roues. Des outillages pourront notamment être fixés au châssis 3 de l'engin, par exemple des outillages de pulvérisation de produits, de travail du sol, ou encore de taille des cultures. Par ailleurs, l'engin motorisé 100 comprend en particulier une cabine 5 montée notamment sur la roue avant de l'engin. La cabine 5 est configurée pour accueillir un conducteur de l'engin, dont la présente invention vise à améliorer la maniabilité et le confort de conduite.

L'engin motorisé est, de manière générale, équipé d'un moteur thermique, d'un moteur électrique ou d'un moteur alimenté par un pile à hydrogène configuré pour alimenter une pompe hydraulique. Ensuite, la pompe hydraulique entraîne à son tour au moins un moteur hydraulique aménagé au niveau du moyeu d'une roue de l'engin, alors appelée roue motrice. Il est possible, lorsque cela est approprié, de réaliser plusieurs roues motrices, chacune des roues motrices ayant un moteur hydraulique associé. En particulier, le ou les moteurs hydrauliques sont alors reliés à la pompe hydraulique par l'intermédiaire d'un circuit hydraulique, présentant par exemple des conduites flexibles.

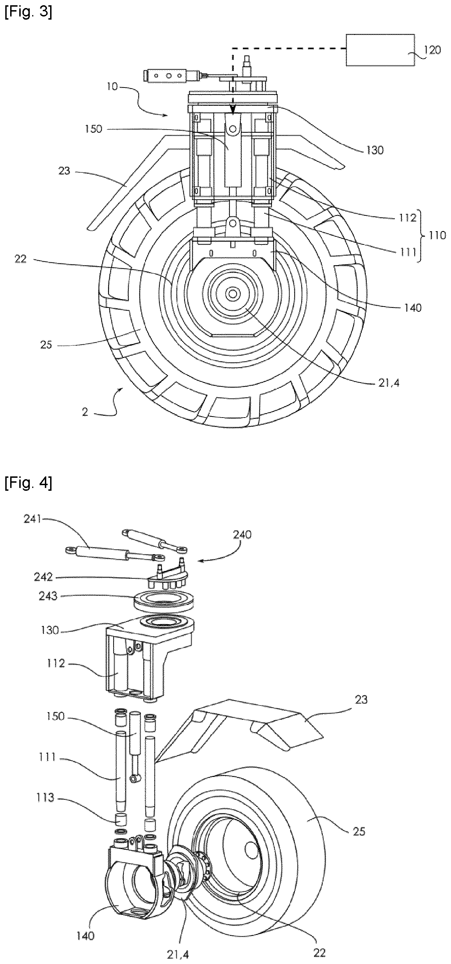

Les figures 2 et 3 illustrent deux vues différentes de la roue 2 intégrant le système de suspension 10 selon un aspect de l'invention. Le système de suspension 10 est mécaniquement connecté d'une part à un moyeu 21 de la roue 2 correspondante et d'autre part au châssis de l'engin motorisé. On entend par mécaniquement connectés que les éléments respectifs sont en liaison mécanique entre eux.

Le moyeu 21 de la roue 2 intégrant le système de suspension 10 peut notamment être moteur ou porteur, selon respectivement si la roue est motrice ou non-motrice. Le système de suspension 10 selon l'invention peut en effet s'intégrer à une roue motrice ou à une roue non-motrice.

Ainsi, lorsque le système de suspension 10 est intégré à une roue motrice, le moyeu 21 de la roue comprend en particulier un organe moteur 4. L'organe moteur 4 correspond, de préférence, à un moteur hydraulique intégré à la roue 2 correspondante, également communément appelé moteur hydraulique « intra-roue ». Un tel moteur hydraulique peut avantageusement comprendre un système de freinage intégré. Dans la suite de la description, le système de suspension 10 sera décrit dans le contexte de son intégration à une roue motrice, où le moyeu 21 de la roue 2 correspond à l'organe moteur 4. Néanmoins, le moyeu 21 de la roue peut alternativement être uniquement porteur.

Le système de suspension 10 est, de préférence, mécaniquement couplé à l'organe moteur 4 d'une part, et en liaison mécanique avec le châssis d'autre part. On entend notamment par mécaniquement couplés qu'au moins une partie du système de suspension 10 et l'organe moteur 4 sont mécaniquement solidaires l'un de l'autre. Autrement dit, que ladite partie du système de suspension 10 est fixée de manière rigide à l'organe moteur 4. En particulier, le système de suspension 10 peut être mécaniquement couplé à une partie fixe de l'organe moteur 4, c'est-à-dire à une partie de l'organe moteur 4 ne tournant pas selon l'axe de rotation de la roue correspondante, à savoir par exemple le carter de l'organe moteur 4. Le système de suspension 10 permet par conséquent d'amortir les vibrations de la roue 2 correspondante.

De plus, le système de suspension 10 comprend deux éléments glissières 110 formant une fourche de suspension. Les deux éléments glissières 110 sont notamment positionnés de part et d'autre de l'axe de rotation de la roue 2 correspondante, de sorte à substantiellement encadrer l'organe moteur 4 (ou respectivement le moyeu 21 de la roue 2 correspondante), pour une transmission plus équilibrée des efforts mécaniques.

En outre, le système de suspension 10 comprend un vérin de suspension 150 et un système d'accumulateur hydraulique 120. Le vérin de suspension est, de préférence, un vérin hydraulique, mais peut également être un vérin pneumatique. Le vérin de suspension contribue ainsi à la fois à la suspension et à l'amortissement de la roue correspondante. Le vérin de suspension 150 est couplé au système d'accumulateur hydraulique 120 configuré pour permettre l'ajustement de l'amortissement conféré par le système de suspension 10. Autrement dit, le système d'accumulateur hydraulique permet de régler l'amortissement conféré par le système de suspension 10.

La présente invention, en intégrant la suspension à la roue, permet d'améliorer le confort de conduite de l'engin par le conducteur. De plus, la mise en place du vérin de suspension associé au système d'accumulateur hydraulique offre l'avantage considérable de permettre d'ajuster l'amortissement selon le type d'opération à mener par le conducteur. En effet, pour des opérations nécessitant plus de précision, l'amortissement peut être réduit, et inversement.

Le système de suspension 10 peut par ailleurs comprendre un ressort ou un ensemble de ressorts (non illustré sur les figures).

De plus, le vérin de suspension 150 peut avantageusement être positionné entre les deux éléments glissières 110 du système de suspension 10. Mettre en place le vérin de suspension 150 entre les deux éléments glissières 110 permet de limiter encore l'encombrement du système de suspension 10, et d'avoir un module compact de suspension.

De manière préférée, le système de suspension 10 est intégré à la roue avant de l'engin motorisé 100. Par conséquent, le système de suspension permet d'atténuer la transmission des vibrations de la roue avant à la cabine en général située juste au-dessus de la roue avant. Le système de suspension 10 permet également d'ajuster la hauteur de l'avant du châssis pour modifier la hauteur d'un outil telle qu'une rogneuse par exemple.

Par ailleurs, la roue 2 comprend classiquement une jante 22, un pneu 25 monté sur la jante 22, et un pare-boue 23 aussi appelé garde boue. Le pare-boue 23 est, de préférence, apte à pouvoir suivre les changements de direction de la roue. Par exemple, le pare-boue 23 peut être mécaniquement couplé à la fourche de suspension.

La figure 4 illustre une vue éclatée de la roue intégrant le système de suspension. Chacun des deux éléments glissières comprend notamment une colonne de guidage 111 et un fourreau de guidage 112 configuré pour recevoir la colonne de guidage 111. Autrement dit, le système de suspension comprend une paire de colonnes de guidage 111 et une paire de fourreaux de guidage 112. La colonne de guidage 111 et le fourreau de guidage 112 de chacun des deux éléments glissières sont notamment en liaison glissière l'un avec l'autre, ou encore en liaison pivot glissant l'un avec l'autre.

De plus, le système de suspension peut, en particulier, comprendre un ensemble de bagues de guidage 113 localisées entre les colonnes de guidage 111 et les fourreaux de guidage 112 des deux éléments glissières, de sorte à faciliter le glissement des colonnes de guidage 111 dans les fourreaux de guidage 112. Par exemple, le système de suspension peut comprendre une paire ou deux paires de bagues de guidage 113, chaque paire de bagues de guidage correspondant respectivement à chacun des deux éléments glissières. L'ensemble de bagues de guidage 113 est notamment installé à l'intérieur des fourreaux de guidage 112.

De manière préférée, le système de suspension 10 comprend un support fixe de fourche 130 mécaniquement connecté au châssis, et un support mobile de fourche 140 mécaniquement connecté au moyeu 21 de la roue 2 intégrant le système de suspension, à savoir l'organe moteur 4 dans le cas d'un moyeu moteur. Alors, d'une part, les colonnes de guidage 111 ou les fourreaux de guidage 112 des deux éléments glissières sont mécaniquement couplés au support fixe de fourche 130. D'autre part, l'autre des colonnes de guidage 111 ou des fourreaux de guidage 112 des deux éléments glissières 110 sont mécaniquement couplés au support mobile de fourche 140. Pour rappel, on entend par mécaniquement couplés que les éléments respectifs sont mécaniquement solidaires l'un de l'autre.

En particulier, le support fixe de fourche 130 est notamment mécaniquement couplé aux fourreaux de guidage 112, et le support mobile de fourche 140 mécaniquement couplé aux colonnes de guidage 111, comme dans l'exemple de roue représenté aux figures 2 à 4. Alternativement, le support fixe de fourche 130 peut être mécaniquement couplé aux colonnes de guidage 111, et le support mobile de fourche 140 mécaniquement couplé aux fourreaux de guidage 112. Dans la suite de la description, seul le cas où le support fixe de fourche 130 est mécaniquement couplé aux fourreaux de guidage 112, et le support mobile de fourche 140 mécaniquement couplé aux colonnes de guidage 111, sera développé ci-après. En effet, cette configuration présente l'avantage d'améliorer l'encombrement et la tenue mécanique du système de suspension. Toutefois, l'autre option est possible.

L'utilisation du support fixe de fourche 130 et du support mobile de fourche 140 permet avantageusement de renforcer mécaniquement la fixation des deux éléments glissières. En effet, la paire de fourreaux de guidage est alors avantageusement fixée de manière robuste au support fixe de fourche 130. De façon similaire, la paire de colonnes de guidage peut être encastrée de manière rigide au support mobile de fourche 140.

Le vérin de suspension 150, est alors, de préférence, mécaniquement couplé d'une part au support fixe de fourche 130 et d'autre part au support mobile de fourche 140. Par exemple, le cylindre du vérin de suspension 150 est mécaniquement couplé au support fixe de fourche 130, et le piston du vérin de suspension 150 est mécaniquement couplé au support mobile de fourche 140. La configuration du vérin de suspension peut néanmoins être intervertie. Cette intégration du vérin de suspension 150 permet d'améliorer la robustesse mécanique du système de suspension.

D'une part, le support fixe de fourche 130 peut également être configuré pour recevoir voire pour caler des câbles électriques et/ou des portions d'un circuit hydraulique, par exemple des flexibles hydrauliques.

De plus, le support fixe de fourche 130 peut, de préférence, présenter une section substantiellement en L. La section substantiellement en L du support fixe de fourche 130 permet d'avoir un support robuste du système de suspension tout en limitant l'encombrement généré par le système de suspension.

Alors, les fourreaux de guidage 112 sont notamment aménagés le long de l'une des branches de la section substantiellement en L du support fixe de fourche 130, ladite branche étant substantiellement orientée dans un plan perpendiculaire à l'axe de rotation de la roue correspondante et en direction de l'axe de rotation de la roue correspondante. Le support fixe de fourche 130 peut préférablement comprendre un cadre destiné à maintenir les fourreaux de guidage 112. Le cadre peut avantageusement s'étendre substantiellement sur la longueur des fourreaux de guidage 112, et comprendre des moyens de maintien des fourreaux de guidage 112, par exemple à deux extrémités des fourreaux de guidage 112.

L'autre branche de la section substantiellement en L du support fixe de fourche 130 vient notamment se rabattre au-dessus de la roue 2 correspondante, en particulier selon un plan substantiellement parallèle à l'axe de rotation de la roue 2 correspondante. Ainsi, le support fixe de fourche permet de limiter l'encombrement du système de suspension.

D'autre part, le support mobile de fourche 140 est notamment mécaniquement connecté à l'organe moteur 4. En particulier, le support mobile de fourche 140 est configuré pour se fixer sur une partie fixe de l'organe moteur 4, à savoir une partie de l'organe moteur 4 qui n'est pas rotative selon l'axe de rotation de la roue correspondante. Cette partie fixe peut notamment correspondre au carter de l'organe moteur 4. Alors, le support mobile de fourche 140 peut avantageusement se fixer sur ladite partie fixe de l'organe moteur 4, en venant contre tout en encerclant ladite partie fixe de l'organe moteur 4.

Le support mobile de fourche 140 peut également comprendre des éléments récepteurs configurés pour recevoir et maintenir les colonnes de guidage 111.

Préférablement, la roue intégrant le système de suspension 10 est une roue directrice, en particulier une roue avant directrice. Alors, l'engin motorisé 100 comprend avantageusement un système de direction 240 configuré pour transmettre la direction à la roue correspondante. Par exemple, le système de direction 240 peut comprendre au moins une biellette de direction ou au moins un vérin de direction 241, et être mécaniquement couplé au moyeu 21 de la roue correspondante de sorte à transmettre la direction à la roue. En particulier, le système de direction 240 peut être mécaniquement couplé au moyeu 21 de la roue correspondante par l'intermédiaire du système de suspension. Autrement dit, le système de direction 240 est avantageusement mécaniquement couplé au système de suspension. Ceci permet avantageusement d'améliorer la robustesse de la transmission de la direction.

En particulier, comme illustré sur la figure 4, le système de direction 240 peut comprendre deux vérins de direction 241, un plateau de direction 242, et une couronne d'orientation 243, de sorte que les deux vérins de direction 241 sont mécaniquement couplés au système de suspension par l'intermédiaire du plateau de direction 242 et de la couronne d'orientation 243.

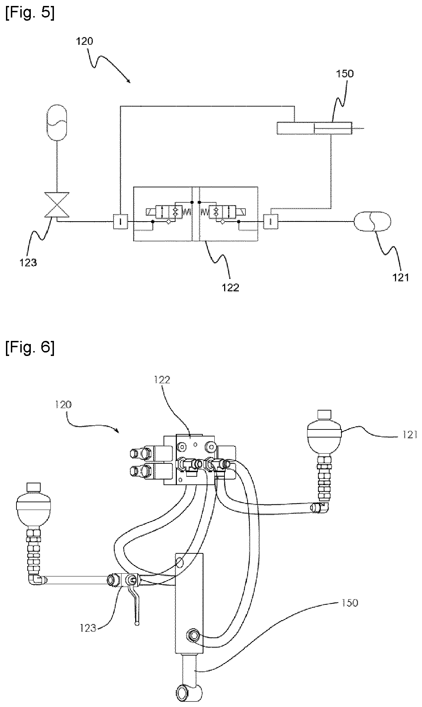

La figure 5 est un diagramme schématique et la figure 6 une représentation schématique d'un circuit fluidique reliant le vérin de suspension 150 au système d'accumulateur hydraulique 120. Dans le cas particulier où le vérin de suspension est un vérin hydraulique, le circuit fluidique est alors un circuit hydraulique. Le fluide circulant dans le circuit hydraulique est en particulier une huile.

Le système d'accumulateur hydraulique 120 comprend, de préférence, deux accumulateurs hydrauliques 121 respectivement couplés par un circuit fluidique aux deux chambres du vérin de suspension 150, les deux chambres étant séparées l'une de l'autre par le piston du vérin de suspension 150. Autrement dit, l'un des deux accumulateurs hydrauliques 121 est couplé par un circuit fluidique à l'une des deux chambres du vérin de suspension 150, et l'autre accumulateur hydraulique des deux accumulateurs hydrauliques 121 est couplé par un circuit fluidique à l'autre chambre des deux chambres du vérin de suspension 150. Le vérin de suspension 150 est alors préférablement en un vérin double-effet. Les deux accumulateurs hydrauliques participent notamment à la compression et à la détente du système de suspension. Alternativement, le système d'accumulateur hydraulique 120 peut comprendre uniquement un accumulateur hydraulique 121 couplé par un circuit fluidique au vérin de suspension, qui est alors un vérin simple-effet.

Les accumulateurs hydrauliques 121 peuvent, par exemple, être de type accumulateur hydraulique à membrane, à vessie ou encore à piston.

Le système d'accumulateur hydraulique 120 peut avantageusement comprendre un distributeur hydraulique 122 reliant par un circuit fluidique le vérin de suspension 150 aux deux accumulateurs hydrauliques 121, afin de diriger le fluide circulant le circuit fluidique. Le distributeur hydraulique peut notamment être un électrodistributeur.

Aussi, le système de suspension 10 peut avantageusement être configuré pour coupler et découpler le vérin de suspension 150 du système d'accumulateur hydraulique 120, de sorte respectivement à activer et à désactiver l'amortissement de la roue 2 correspondante par le système de suspension 10. Cela permet notamment de désactiver l'amortissement au cours d'une opération nécessitant une plus grande précision. Cela est notamment le cas lorsque l'outillage utilisé risque d'être soumis à des forces de forte amplitude, par exemple lors d'une opération de rognage des cultures de vignes.

En particulier, le système d'accumulateur hydraulique 120 peut comprendre une vanne 123 permettant de coupler et de découpler l'un des accumulateurs hydrauliques 121 du vérin de suspension 150.

De plus, le système d'accumulateur hydraulique 120 peut avantageusement être, au moins partiellement, déporté par rapport à la roue 2 correspondante, le système d'accumulateur hydraulique 120 pouvant notamment être fixé au châssis 3. Ainsi, l'encombrement au niveau de la roue est peu impacté par la mise en place du système d'accumulateur hydraulique. De plus, le châssis offre avantageusement un support plus stable au système d'accumulateur hydraulique.

L'engin motorisé peut également comprendre un dispositif de commande électronique configuré pour commander l'ajustement de l'amortissement conféré par le système de suspension, notamment en commandant le distributeur hydraulique. Le dispositif de commande électronique peut notamment commander la circulation du fluide du vérin de suspension vers les accumulateurs hydrauliques afin de pouvoir ajuster la dureté de la suspension jusqu'à la complète désactivation de la suspension.

En outre, l'invention permet avantageusement d'ajuster l'assiette de l'engin motorisé, correspondant à une position neutre du système de suspension.

Le système de suspension pour engin motorisé selon l'invention présente l'avantage de pouvoir être activé/désactivé et être réglé aisément. Ainsi, il sera avantageusement activé lorsque que l'engin se déplacera sur route, entre deux zones de travail, de manière à assurer une conduite en toute sécurité au conducteur et sans débauche inutile d'énergie. Il sera, d'autre part, avantageusement désactivé lors d'un travail en plein champs afin d'apporter la précision nécessaire à certains travaux.

## Revendications

1. Système de suspension (10) intégré à une roue (2) pour un engin motorisé (100) présentant au moins trois roues et un châssis (3), le système de suspension (10) étant mécaniquement connecté d'une part au moyeu (21) de la roue (2) correspondante et d'autre part au châssis (3), et **caractérisé en ce que** le système de suspension (10) comprend deux éléments glissières (110) formant une fourche de suspension, un vérin de suspension (150) étant couplé à un système d'accumulateur hydraulique (120) configuré pour permettre l'ajustement de l'amortissement conféré par le système de suspension (10).

2. Système de suspension (10) selon la revendication précédente, chacun des deux éléments glissières (110) comprenant une colonne de guidage (111) et un fourreau de guidage (112) configuré pour recevoir la colonne de guidage (111), **caractérisé en ce que** le système de suspension (10) comprend un support fixe de fourche (130) mécaniquement connecté au châssis (3), et un support mobile de fourche (140) mécaniquement connecté au moyeu (21) de la roue (2) correspondante, l'un des colonnes de guidage (111) ou des fourreaux de guidage (112) des deux éléments glissières (110) étant mécaniquement couplés au support fixe de fourche (130), l'autre des colonnes de guidage (111) ou des fourreaux de guidage (112) des deux éléments glissières (110) étant mécaniquement couplés au support mobile de fourche (140).

3. Système de suspension (10) selon la revendication précédente, **caractérisé en ce que** le support fixe de fourche (130) présente une section substantiellement en L, les fourreaux de guidage (112) des deux éléments glissières (110) étant aménagés le long de l'une des branches de la section substantiellement en L, ladite branche étant substantiellement orientée dans un plan perpendiculaire à l'axe de rotation de la roue (2) correspondante et en direction de l'axe de rotation de la roue (2) correspondante, l'autre branche de la section substantiellement en L venant se rabattre au-dessus de la roue (2) correspondante.

4. Système de suspension (10) selon l'une quelconque des revendications précédentes, **caractérisé en ce que** le système d'accumulateur hydraulique (120) comprend deux accumulateurs hydrauliques (121) respectivement couplés par un circuit fluidique aux deux chambres du vérin de suspension (150), et un distributeur hydraulique (122) reliant par un circuit fluidique le vérin de suspension (150) aux deux accumulateurs hydrauliques (121).

5. Système de suspension (10) selon l'une quelconque des revendications précédentes, **caractérisé en ce que** le système de suspension (10) est configuré pour coupler et découpler le vérin de suspension (150) du système d'accumulateur hydraulique (120), de sorte respectivement à activer et à désactiver l'amortissement de la roue (2) correspondante par le système de suspension (10).

6. Système de suspension (10) selon l'une quelconque des revendications précédentes, le système d'accumulateur hydraulique (120) étant déporté par rapport à la roue (2) correspondante, le système d'accumulateur hydraulique (120) étant notamment fixé au châssis (3).

7. Engin motorisé (100) comprenant le système de suspension (10) selon l'une quelconque des revendications précédentes de manière à former un engin agricole, notamment un enjambeur de traitement dans un vignoble.

8. Engin motorisé (100) selon la revendication précédente, comprenant un système de direction (240) configuré pour transmettre la direction à la roue (2) intégrant le système de suspension (10), le système de direction (240) étant mécaniquement couplé au système de suspension (10).

9. Engin motorisé (100) selon la revendication 7 ou 8 comprenant trois roues dont une roue avant et deux roues arrières, **caractérisé en ce que** le système de suspension (10) est intégré à la roue avant de l'engin motorisé (100).
